Europäisches Patentamt

**European Patent Office**

Office européen des brevets

(11) Veröffentlichungsnummer: **0 238 820**
A2

# EUROPÄISCHE PATENTANMELDUNG

(21) Anmeldenummer: **87101719.0**

(22) Anmeldetag: **07.02.87**

(51) Int. Cl.⁴: **A 23 L 1/01**

(30) Priorität: **26.03.86 DE 3610124**

(43) Veröffentlichungstag der Anmeldung: **30.09.87**
**Patentblatt 87/40**

(84) Benannte Vertragsstaaten: **AT BE ES FR GB IT NL**

(71) Anmelder: **NORDISCHER MASCHINENBAU RUD. BAADER GMBH + CO KG, Geniner Strasse 249, D-2400 Lübeck (DE)**

(72) Erfinder: **Mette, Manfred, Dr. Ing., Ringstrasse 19b, D-2000 Hamburg 73 (DE)**

(54) **Einrichtung zur kontinuierlichen Wärmebehandlung von Nahrungsmitteln.**

(57) Die Erfindung betrifft eine Einrichtung zur kontinuierlichen Wärmebehandlung von Nahrungsmitteln. Das Kennzeichen der vorgeschlagenen Einrichtung besteht in der Unterteilung derselben durch Verwendung einer Reihe von voneinander getrennten Behältern zur Aufnahme des wässerigen Wärmeträgers, welche von dem Förderer nacheinander durchlaufen werden, und welche untereinander variabel flüssigkeitsleitend verbindbar sind. Das dadurch variabel gestaltbare Durchflußsystem ermöglicht eine optimale Berücksichtigung der jeweiligen produktbedingten ernährungsphysiologischen und sensorischen Anforderungen unter gleichzeitiger Ausrichtung des Prozesses auf eine Betriebskostenminimierung.

Einrichtung zur kontinuierlichen Wärmebehandlung
von Nahrungsmitteln

Die Erfindung betrifft eine Einrichtung zur kontinuierlichen Wärmebehandlung von Nahrungsmitteln unter
atmosphärischem Druck zum Zwecke der Garung und/oder
Entwässerung durch Kontakt mit einem flüssigen Wärmeträger, vorzugsweise Wasser, umfassend ein mit einer
Eingabe und einer Ausgabe für das Behandlungsgut versehenes Gehäuse, welches eine Reihe von Behandlungszonen umschließt, einen endlosen, umlaufend angetriebenen, diese nacheinander durchlaufenden Förderer
zum Befördern des Behandlungsgutes durch die Behandlungszonen, Mittel zum Zuführen und Abführen des Wärmeträgers und zum Fördern desselben innerhalb der Einrichtung, sowie Wärmetauschmittel zur Regulierung des
Wärmeinhaltes des Wärmeträgers.

Derartige Einrichtungen finden Anwendung bei der industriellen Aufbereitung von Nahrungsmitteln durch
Wärmebehandlung. So erfolgt ihr Einsatz beispielsweise,
um alle Arten von Kochwurst, vakuumverpackte Wurst, geblisterte Wurst-Sammelpackungen, Fertiggerichte in
versiegelten Kunststoffbehältern, Fischprodukte u. a.
Erzeugnisse zu garen oder auch beispielsweise alle
Arten von Kohl- und Knollengemüsen zu blanchieren.

Für die Wirtschaftlichkeit des Betriebes solcher Einrichtungen ist die Temperaturführung von entscheidendem
Einfluß, der aber auch hinsichtlich der Erhaltung der
Qualität des Behandlungsgutes überragende Bedeutung zukommt, insofern, als insbesondere punktuelle Überhitzung
des Behandlungsgutes auf dieses stark qualitätsmindernde
Wirkung hat. Man hat daher zunächst der Temperaturregelung und -verteilung besonderes Augenmerk gewidmet
und dafür Sorge getragen, daß im gesamten Wasserbad
möglichst gleichmäßige und genau geregelte Temperatur
herrscht.

Diese Vorgehensweise ist in mehrfacher Hinsicht nachteilig. So ist es in den meisten Fällen bei Garprozessen erwünscht, in dem Gargut eine möglichst homogene Temperaturverteilung zu erzielen, um auf jeden Teil des Querschnitts mit der Temperatur einzuwirken, die zumindest nicht wesentlich von der Temperatur abweicht, die beispielsweise in ernährungsphysiologischer und sensorischer Hinsicht als günstig erkannt wurde. Aus vermeintlich wirtschaftlichen Gründen wird jedoch üblicherweise eine demgegenüber erhöhte Temperatur gefahren mit dem Ziel, die gewünschte Kerntemperatur schneller zu erreichen, d. h. einen höheren Durchsatz aufgrund geringerer Durchlaufzeiten zu erzielen. Das hat jedoch die Gefahr zur Folge, daß das Gargut an seinen Randzonen überhitzt wird, bevor die Kerntemperatur den gewünschten Wert erreicht hat. Neben der in diesem Zusammenhang erwähnten Qualitätsbeeinträchtigung verursacht diese Handhabung insbesondere bei empfindlichen Verpackungshüllen, beispielsweise bei Würsten mit Hüllen aus bestimmten Darmqualitäten, eine erhöhte Bruchquote bei der Wärmebehandlung aufgrund der auf diese Weise entstehenden erhöhten Spannungen in dem Gargut. Darüber hinaus erweist sich die Energiebilanz u. a. infolge der exponentiell mit der Temperatur wachsenden Wärmeverluste als nicht günstig.

Es ist daher die Aufgabe der Erfindung, eine Einrichtung der im Erfindungsbetreff angegebenen Art vorzuschlagen, welche gestattet, die Behandlung unter optimaler Berücksichtigung der jeweiligen ernäherungsphysiologischen und sensorischen Anforderungen durchzuführen. Weiter soll ermöglicht werden, dies unter Ausrichtung auf eine Betriebskostenminimierung bei gleichzeitig
universeller Anpaßbarkeit der Betriebsbedingungen
an die durch das jeweilige Gargut bedingten Erfordernisse zu erreichen.

Diese Aufgabe wird erfindungsgemäß dadurch gelöst, daß
eine Reihe von voneinander getrennten, jeweils den
Wärmeträger aufnehmenden Behältern vorgesehen ist,
welchen jeweils die Mittel zum Zuführen und Abführen
des Wärmeträgers separat und unabhängig voneinander
regelbar zugeordnet sind, und daß die Behälter untereinander variabel verbindbare Verbindungsleitungen
für einen variablen Austausch des Wärmeträgers innerhalb der Einrichtung aufweisen.

Die damit erzielbaren Vorteile bestehen insbesondere
darin, daß jedes denkbare Behandlungsverfahren mit ein
und derselben Einrichtung realisierbar ist, wobei
auch die Wärmetauschmittel inform von solchen für die
Zuführung der benötigten Wärmeenergie, als auch solchen
für eine eventuelle Abführung derselben variabel einsetzbar sind, was nicht zuletzt auch eine Optimierung
unter dem Gesichtspunkt günstigster Betriebskosten
ermöglicht.

Weitere vorteilhafte Ausführungsdetails ergeben sich
aus den Unteransprüchen.

Die Erfindung wird anhand einiger Ausführungsbeispiele
erläutert, die als Schaltbeispiele in den Figuren
1 bis 4 schematisch dargestellt sind.

- 4 -

Dabei zeigt

Fig. 1 eine Kochanlage grundsätzlichen Aufbaus in einem Schaltbeispiel, welches eine zu einem Wärmerück- gewinnungskreis gekoppelte Vor- wärm- und Vorkühlzone, eine Stufenkochzone und eine Endkühlzone ergibt,

Fig. 2 eine solche in einer Schaltvariante, bei der sich eine verlängerte Stufen-Kochzone und Stufen- Kühlzone ergibt,

Fig. 3 eine solche in einer Schaltvariante, bei der eine Vorwärmzone und eine Kühlzone zu einem Wärmerückgewinnungskreis gekoppelt ist und sich eine verlängerte Kochzone ergibt, und

Fig. 4 eine solche in einer Schaltvariante, die lediglich eine lange Kochzone ergibt.

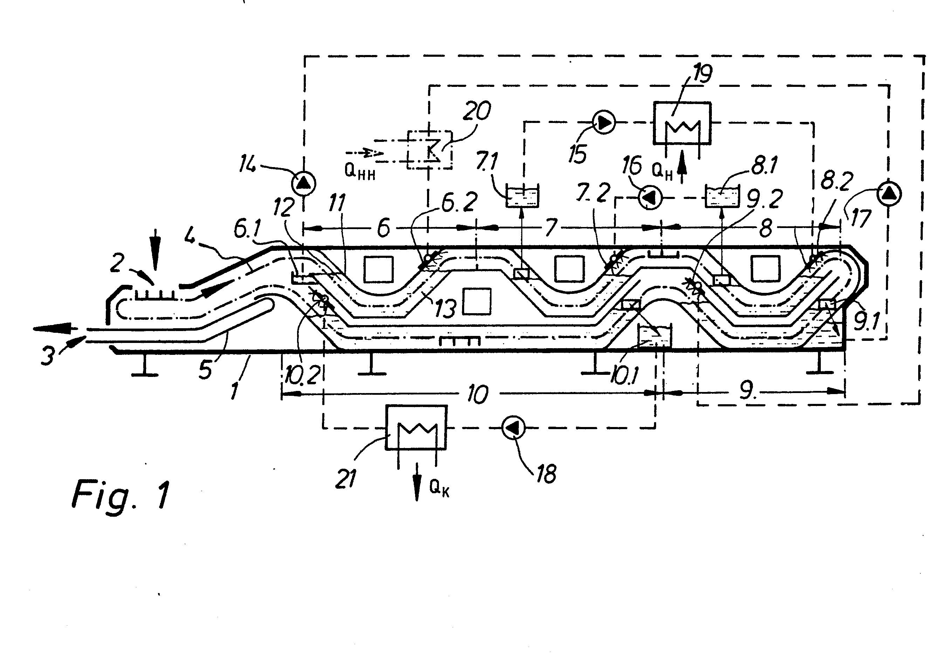

Entsprechend Fig. 1 ist die Gesamtanlage von einem geeignet gestalteten Gehäuse  1  umgeben, welches eine Eingangszone  2  für das zu behandelnde Gut und eine Ausgabezone  3  für die Freigabe desselben aufweist. Zur Übernahme des Behandlungsgutes ist ein durch einen geeigneten Regelantrieb angetriebener, endlos umlaufender Förderer  4  vorgesehen, welcher die Gesamtanlage durchläuft und dabei jeweils durch geeignete Umlenkungen in der erforderlichen Weise geführt wird. Der Förderer  4  ist mit nicht dargestellten Aufnahmeelementen für das Behandlungsgut in Gestalt schaukelartiger, perforierter Körbe versehen, welche in regelmäßigen Abständen an dem Förderer  4  befestigt sind. Der Ausgabezone  3  ist ein Austragsförderer  5  aus einem perforierten Förderband zugeordnet, über welchem eine nicht gezeigte Wendestelle zur Überkopfführung der Körbe und damit Übergabe des fertigbehandelten Gutes auf den Austragsförderer  5  angeordnet ist. Durch eingezogene Bleche wannenförmiger Ausbildung ist das Gehäuse  1  in eine Reihe von separate Behandlungszonen ergebende Behälter 6  bis  10  für die Aufnahme des Wärmeträgers unterteilt. Die Anordnung der Behälter  6  bis  10  und damit der Behandlungszonen erfolgt dabei in Etagen verteilt, so daß  sich eine Bauweise relativ geringen Raumbedarfs ergibt. Die Behälter selbst sind durch konvex gestaltete Verdrängerbleche  11  in jeweils zwei kommunizierende Behälterteile  12  und  13  unterteilt, welche von dem Förderer  4  nacheinander durchlaufen werden. Jedem Behälter  6  bis  10  ist in seinem Eingangsbereich ein den Höchststand des Wärmeträgers bestimmender Überlauf 6.1  bis  10.1  , in seinem Ausgangsbereich eine Dusche 6.2  bis  10.2  zugeordnet. Die Überläufe  6.1  bis  10.1  sind jeweils mit einem Auffangbehälter versehen, in welchem die Saugleitung jeweils einer Förderpumpe 14 bis 18 mündet. Die jeweiligen Druckleitungen derselben sind wahlweise mit den Duschen
6.2 bis 10.2 verbindbar.

Die Wirkungsweise der Einrichtung ist, zunächst beschrieben
anhand der Verkettung gemäß Fig. 1 folgende:
Nachdem die Behälter 6 bis 10 über geeignete Zuläufe
mit als Wärmeträger wirksamem Wasser aufgefüllt sind,
wird die Förderpumpe 15 ingangsgesetzt, die das Wasser
aus dem Behälter 7 dem Behälter 8 über einen in der
Druckleitung derselben befindlichen Wärmetauscher 19
unter Aufheizung zuleitet. Gleichzeitig wird die Förderpumpe 16 in Betrieb genommen, die das in den Überlauf 8.1 gelangende Wasser der Dusche 7.2 zuführt,
so daß zwischen den Behältern 7 und 8 ein Kreislauf
stattfindet. Sobald die eingestellte Wassertemperatur
erreicht ist, werden der Förderer 4 sowie die Förderpumpen 14, 17 und 18 gestartet, so daß das Behandlungsgut in die Einrichtung geleitet wird und der Wärmeträger
in allen Behältern inbezug auf die Laufrichtung des
Förderers 4 im Gegenstrom zirkuliert. Um die Inbetriebnahme der Einrichtung unter Bedingungen zu ermöglichen,
die zumindest annähernd den sich im Betrieb einstellenden
Zuständen entsprechen, kann das dem Behälter 6 zugeleitete
Wasser über einen Hilfs-Wärmetauscher 20 vorgewärmt
werden, so daß das Wasser in diesem Behälter sowie in
dem mit diesem gekoppelten Behälter 9 in seiner Temperatur angehoben wird. Das Behandlungsgut wird so zunächst
in dem Behälter 6 vorgewärmt und tritt mit dementsprechend angehobener Temperatur in die eigentliche
Kochzone, hier repräsentiert durch die Behälter 7
und 8 ein. Im Behälter 9 beginnt die Rückkühlung,
die bewirkt, daß ein Teil der dem Behandlungsgut innewohnenden Wärmeenergie an den in diesem befindlichen
Wärmeträger übergeht, so daß dessen Wärmeinhalt aufgrund

- 7 -

der Überleitung desselben in den Behälter 6 für die Vorwärmung des nachfolgenden Behandlungsgutes genutzt werden kann. Aus dem Behälter 9 wird dieses in dem Behälter 10 übergeführt, wo es auf die gewünschte Endtemperatur rückgekühlt wird, die bedarfsweise durch Kühlung des in diesem befindlichen Wärmeträgers über einen Wärmetauscher 21 eingestellt wird.

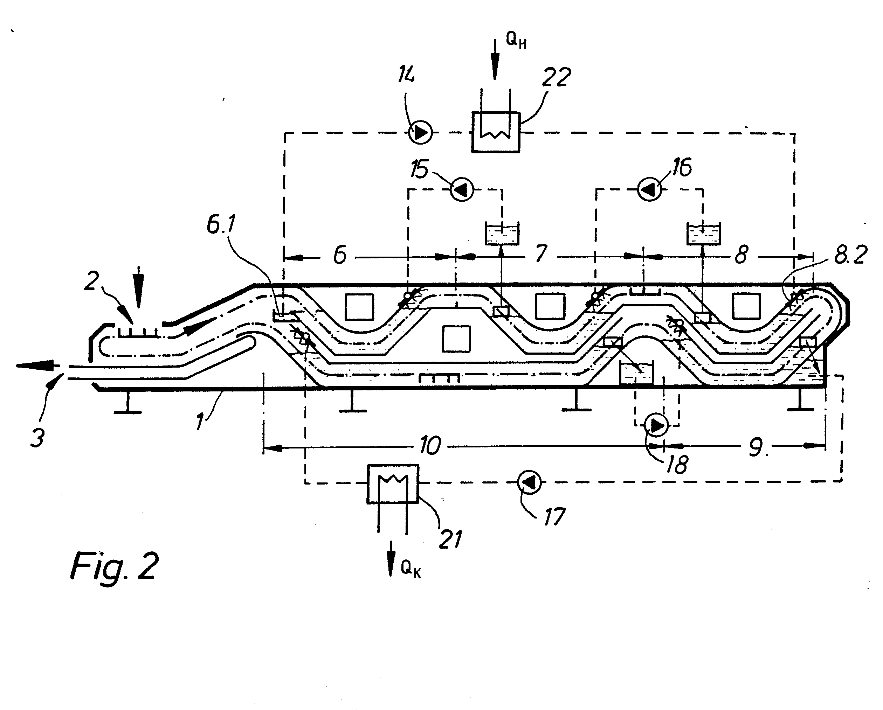

Gemäß Fig. 2 ist eine Anlagenschaltung vorgesehen, die lediglich eine Kochzone und eine Kühlzone umfaßt. Das wird erreicht dadurch, daß die mit dem Überlauf 6.1 in Verbindung stehende Förderpumpe 14 an die Dusche 8.2 angeschlossen wird und die Förderpumpen 15 und 16 als Verbindungsförderer zwischen den Behältern 6 und 7 sowie 7 und 8 herangezogen werden. Für die Erwärmung des Wärmeträgers ist ein Wärmetauscher 22 in den Kreislauf der Förderpumpe 14 geschaltet. Die Kühlzone erstreckt sich über die Behälter 9 und 10 , die durch die Förderpumpe 18 verbunden sind, und deren Wärmeträger bedarfsweise während des durch die Förderpumpe 17 erzeugten Umlaufes über den Wärmetauscher 21 rückgekühlt werden kann.

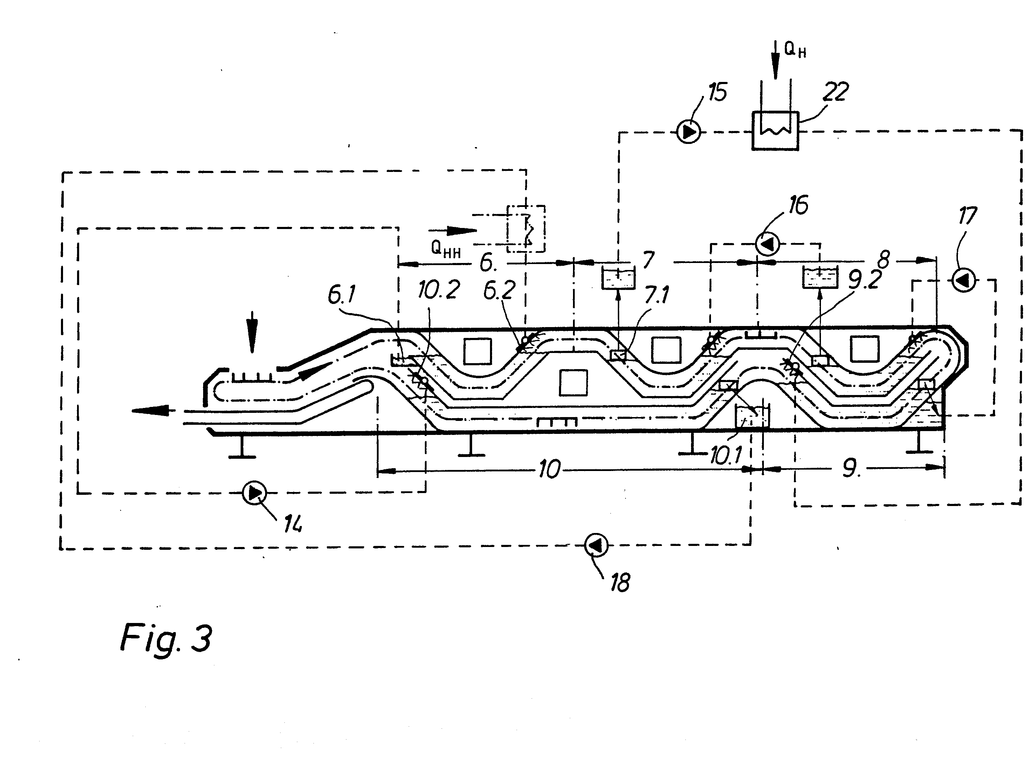

Gemäß Fig. 3 erstreckt sich die Kochzone über die Behälter 7, 8 und 9 dadurch, daß die Förderpumpe 15 den Überlauf 7.1 über den Wärmetauscher 22 mit der Dusche 9.2 verbindet und die Förderpumpen 16 und 17 als Verbindungsförderer zwischen den Behältern 7 und 8 sowie 8 und 9 vorgesehen sind. Weiter ist der Überlauf 10.1 über die Förderpumpe 18 mit der Dusche 6.2 verbunden und der Überlauf 6.1 mittels der Förderpumpe 14 mit der Dusche 10.2 . Es entsteht dadurch ein Wärmerückgewinnungskreis, der die von dem aufgeheizten Behandlungsgut an den Wärmeträger in dem Behälter 10 abgegebene Wärme-

- 8 -

energie dem Behälter 6 zuleitet und damit diese
Behandlungszone zur Vorwärmzone macht.

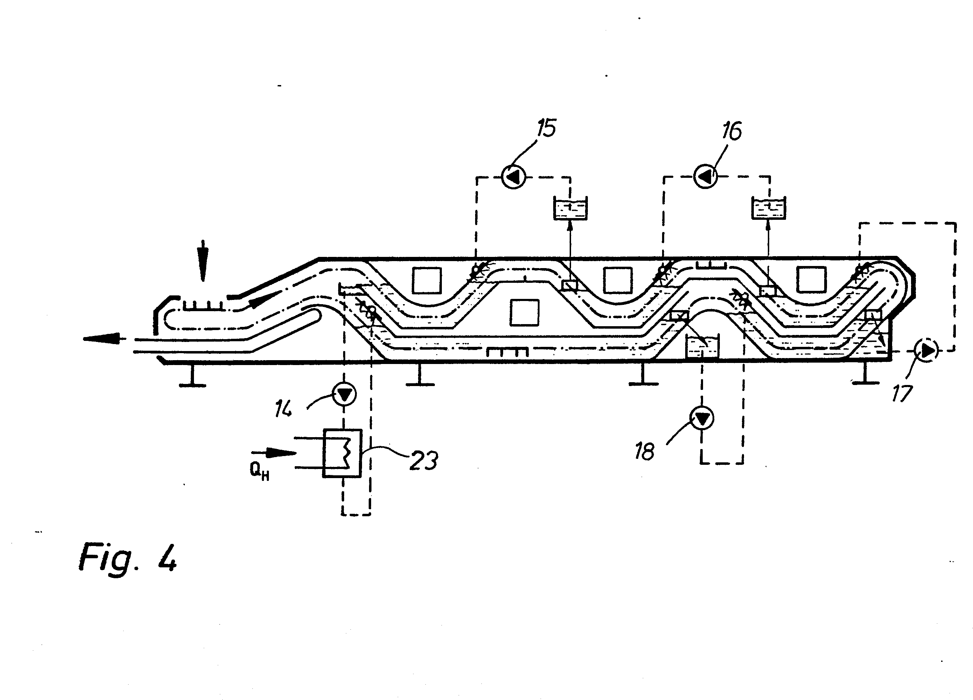

Fig. 4 schließlich zeigt eine reine Kochanlage, in
welcher der durch einen Wärmetauscher 23 aufgeheizte
Wärmeträger nacheinander durch sämtliche Behälter
10 bis 6 gepumpt wird.

- 8ª -

<u>Liste der benutzten Bezeichnungen</u>

|          |     |           |                   |
|----------|-----|-----------|-------------------|
|          |     | 1         | Gehäuse           |
|          |     | 2         | Eingangszone      |
|          |     | 3         | Ausgabezone       |
|          |     | 4         | Förderer          |
|          |     | 5         | Austragsförderer  |
| 6        | bis | 10        | Behälter          |
| 6.1      | bis | 10.1      | Überlauf          |
| 6.2      | bis | 10.2      | Dusche            |
|          |     | 11        | Verdrängerblech   |
|          |     | 12        | Behälterteil      |
|          |     | 13        | "              " |
| 14       | bis | 18        | Förderpumpe       |
|          |     | 19        | Wärmetauscher     |
|          |     | 20        | Hilfs-Wärmetauscher |
|          |     | 21        | "              " |
|          |     | 22        | "              " |
|          |     | 23        | "              " |

## Patentansprüche

1. Einrichtung zur kontinuierlichen Wärmebehandlung von Nahrungsmitteln unter atmosphärischem Druck zum Zwecke der Garung und/oder Entwässerung durch Kontakt mit einem flüssigen Wärmeträger, vorzugsweise Wasser, umfassend ein mit einer Eingabe und einer Ausgabe für das Behandlungsgut vorgesehenes Gehäuse, welches eine Reihe von Behandlungszonen umschließt, einen endlosen, umlaufend angetriebenen, diese nacheinander durchlaufenden Förderer zum Befördern des Behandlungsgutes durch die Behandlungszonen, Mittel zum Zuführen und Abführen des Wärmeträgers und zum Fördern desselben innerhalb der Einrichtung, sowie Wärmetauschmittel zur Regulierung des Wärmeinhaltes des Wärmeträgers, g e k e n n - z e i c h n e t  d a d u r c h , daß eine Reihe von voneinander getrennten, jeweils den Wärmeträger aufnehmenden Behältern (1 bis 5) vorgesehen ist, welchen jeweils die Mittel zum Zuführen und Abführen des Wärmeträgers separat und unabhängig voneinander regelbar zugeordnet sind, und daß die Behälter (1 bis 5) untereinander variabel verbindbare Verbindungsleitungen für einen variablen Austausch des Wärmeträgers innerhalb der Einrichtung aufweisen.

- 2 -

2. Einrichtung nach Anspruch 1 , g e k e n n -
z e i c h n e t   d a d u r c h  , daß die
Mittel zum Zuführen des Wärmeträgers als jeweils
den Ausgangsbereichen jedes Behälters (6 bis 10)
zugeordnete Dusche (6.2 bis 10.2) und die
Mittel zum Abführen des Wärmeträgers als jeweils
den Eingangsbereichen jedes Behälters (6 bis 10)
zugeordnete Förderpumpe (14 bis 18) ausgebildet
sind.

3. Einrichtung nach Anspruch 1 , g e k e n n -
z e i c h n e t   d a d u r c h  , daß die Förderpumpen (14 bis 18) hinsichtlich ihrer Förderleistung und der Förderer (4) zum Befördern des Behandlungsgutes hinsichtlich seiner Geschwindigkeit
regelbar sind.

4. Einrichtung nach einem der vorhergehenden Ansprüche, g e k e n n z e i c h n e t   d a -
d u r c h  , daß dem Eingangsbereich jedes Behälters (6 bis 10) eine Einrichtung zum Austragen von Feststoffen zugeordnet ist.

5. Einrichtung nach einem der vorhergehenden Ansprüche,
g e k e n n z e i c h n e t   d u r c h  Zusammenschaltungen der Behälter (6 bis 10), welche
Schaltkonstellationen der Einrichtung ergeben, die
nach Schaltung 1 eine zu einem Wärmerückgewinnungskreis gekoppelte Vorwärmzone und Vorkühlzone, eine
Stufen-Kochzone und eine Endkühlzone (Fig. 1), nach
Schaltung 2 eine verlängerte Stufen-Kochzone und
Stufen-Kühlzone (Fig. 2), nach Schaltung 3 eine

- 3 -

zu einem Wärmerückgewinnungskreis gekoppelte Vorwärmzone und Kühlzone sowie eine verlängerte Stufen-Kochzone (Fig. 3) und nach Schaltung 4 lediglich eine Stufen-Kochzone (Fig. 4) umfassen, wobei die Leitung des Wärmeträgers grundsätzlich gegen die Laufrichtung des das Behandlungsgut bewegenden Förderers (4) , d. h. nach dem Gegenstromprinzip erfolgt.

Fig. 1

0238820

1/4

Fig. 2

0238820

Fig. 3

Fig. 4

0238820